# EUROPÄISCHE PATENTSCHRIFT

(11) **EP 0 804 679 B1**
(45) Veröffentlichungstag und Bekanntmachung des Hinweises auf die Patenterteilung: **22.03.2000**
(21) Anmeldenummer: 96939007.9
(22) Anmeldetag: 11.11.1996
(51) Int. Cl.: F02D 41/14, F01N 7/00

(54) **KATALYSATOR**
CATALYST
CATALYSEUR

(30) Priorität: 10.11.1995 DE 19542038
(43) Veröffentlichungstag der Anmeldung: 05.11.1997
(73) Patentinhaber: Heraeus Electro-Nite International N.V., 3530 Houthalen (BE)
(72) Erfinder: HÄFELE, Edelbert, D-76228 Karlsruhe (DE)
(74) Vertreter: Kühn, Hans-Christian
(86) Internationale Anmeldenummer: EP9604930
(87) Internationale Veröffentlichungsnummer: WO9717534

(56) Entgegenhaltungen:
- EP-A- 0 589 169
- WO-A-92/00446
- WO-A-93/05284
- PATENT ABSTRACTS OF JAPAN vol. 013, no. 194 (M-823), 10.Mai 1989 & JP 01 019220 A (BABCOCK HITACHI KK), 23.Januar 1989,
- PATENT ABSTRACTS OF JAPAN vol. 017, no. 412 (P-1583), 30.Juli 1993 & JP 05 079922 A (NGK SPARK PLUG CO LTD), 30.März 1993,

## Beschreibung

Die Erfindung betrifft einen Katalysator gemäß dem Oberbegriff des Hauptanspruches sowie ein Verfahren zur Herstellung eines Katalysators.

Ein solcher Katalysator, bei dem auf das Trägermaterial ein Überzug aus katalysator-haltigem Material (wash coat) mit dem darüberliegenden, in Dickschichttechnik aufgebrachten Temperatursensor aufgebracht ist, ist an sich bekannt (EP-O 589 169 A1).

Diese bekannten Katalysatoren haben sich im wesentlichen bewährt. Allerdings ist ihre Standzeit bei hohen Betriebstemperaturen beschränkt.

Der Erfindung liegt deshalb die Aufgabe zugrunde, einen gattungsgemäßen Katalysator gemäß dem Oberbegriff des Hauptanspruchs bei höheren Betriebstemperaturen mit größerer Standzeit auszubilden, bei dem insbesondere empfindliche Temperatursensor- oder Katalysatormaterialien in ihren Standzeiten verbessert werden.

Diese Aufgabe wird bei einer gattungsgemäßen Vorrichtung gemäß dem Oberbegriff des Hauptanspruchs erfindungsgemäß durch dessen kennzeichnende Merkmals sowie durch den Verfahrensanspruch 7 gelöst.

Weitere zweckmäßige Ausgestaltungen und Weiterbildungen der Erfindung sind in den Unteransprüchen gekennzeichnet.

Bei dem erfindungsgemäßen Katalysator hat sich überraschenderweise herausgestellt, daß bei Anordnung des Temperatursensors unter dem darüber angeordneten Katalysatorüberzug einerseits höhere Betriebstemperaturen überhaupt tolerierbar sind, andererseits auch bei diesen höheren Temperaturen längere Standzeiten, insbesondere der Temperatursensor-Komponente, zu erwarten sind. Bei Einsatz eines metallischen Trägermaterials wird dabei der Temperatursensor auf einem elektrischen Isolator angeordnet. Bei Verwendung eines nichtleitenden Trägermaterials, wie z.B. eines Monolithen, ist dies nicht erforderlich.

Bei dem erfindungsgemäßen Verfahren gemäß Anspruch 7 zur Herstellung eines Katalysators mit einem Trägermaterial und einem katalysatorhaltigen keramischen Überzug sowie zumindest einem in Dickschichttechnik aufgebrachten Temperatursensor, wird auf dem Trägermaterial der Temperatursensor in Dickschichttechnik aufgebracht sowie bei einer Temperatur getempert, die gleich oder niedriger ist als die Tempertemperatur eines gegebenenfalls zwischen einem metallischen Trägermaterial und dem Temperatursensor vorgesehenen Isolators, und auf den Temperatursensor wird ein katalysatorhaltiger, keramischer Überzug in Dickschichttechnik aufgebracht und bei einer Temperatur getempert, die gleich oder niedriger ist als die Tempertemperatur des Temperatursensors.

Nach einem besonderen Merkmal der Erfindung weist der Isolator ein Boro-Silikat-Email auf und wird bei Temperaturen von 960° bis 1250°C hergestellt, wobei der auf den Isolator in Dickschichttechnik aufgedruckte Temperatursensor bei einer Temperatur getempert wird, die gleich oder niedriger ist als die Tempertemperatur des Isolators, und daß auf den Temperatursensor eine Katalysatorschicht in Dickschichttechnik aufgebracht wird sowie bei einer Tempertemperatur getempert wird, die gleich oder niedriger ist als die Tempertemperatur des Temperatursensors.

Die erfindungsgemäßen Katalysatoren haben neben den verbesserten Standzeiten den Vorteil, daß die vom Temperatursensor gelieferten Temperatursignale die Temperatur des katalysatorhaltigen keramischen Überzugs ohne Beeinflussung durch die den Katalysator umfließende Gase wiedergeben.

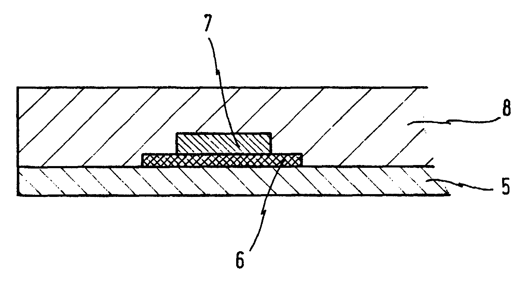

Ein bevorzugtes Ausführungsbeispiel, das einen erfindungsgemäßen Katalysator mit einem metallischen Trägermaterial in Form eines Blechs aus einer Edelstahlfolie in schematischem Querschnitt zeigt, ist in der Zeichnung dargestellt.

Auf einem insgesamt mit 5 bezeichneten, metallischen Trägermaterial ist eine ein Boro-Silikat-Email aufweisende elektrisch isolierende Isolationsschicht 6, vorzugsweise durch Bedrucken aufgebracht. Auf diese Isolationsschicht ist der an sich bekannte Temperatursensor 7 in Dickschichttechnik aufgedruckt.

Das Trägermaterial 5 sowie der Isolator 6 und der Temperatursensor 7 sind mittels eines katalysatorhaltigen, keramischen Überzuges 8, der beispielsweise durch Tauchen aufgebracht wird, überzogen.

Hierbei wird zunächst die Isolationsschicht 6 auf die Oberfläche des Trägermaterials 5 durch Drucken und anschließendem Tempern bei ca. 960 bis 1250°C getempert. Danach wird nach erfolgtem Abkühlen auf den Isolator 6 in Dickschichttechnik der eigentliche, Platin aufweisende Temperatursensor 7 aufgedruckt und ebenfalls bei einer Temperatur zwischen 960 bis 1250°C oder einer tieferen Temperatur getempert. Danach wird das gesamte Trägermaterial in Form des bzw. der Bleche durch Tauchen mit dem das katalysator-haltige keramische Material aufweisenden Überzug versehen und bei einer Temperatur getempert, die gleich oder niedriger ist als die Tempertemperatur des Temperatursensors.

Eine für die Isolatorschicht geeignetes Boro-Silikat-Email kann z.B. die folgende Zusammensetzung haben:
57,5 Gew. - % SiO₂
21,1 Gew. - % Al₂O₃
6,9 Gew.- % B₂O₃
4,6 Gew. - % ZrO₂
5,6 Gew. - % TiO₂
2,6 Gew. - % CaO
1,8 Gew. - % MgO

Das Aufbringen kann in Form einer Siebdruckpaste auf Terpeniolbasis durch Siebdruck auf das Metallsubstrat erfolgen. Die Schicht kann dann z.B. 10 min bei 120°C getrocknet und dann zwei Stunden bei 1.120°C gebrannt werden.

Nach dem Abkühlen kann ein Temperatursensor mit einer Siebdruckpaste mit folgender Zusammensetzung durch Siebdruck aufgetragen werden:
65 % Feststoffanteil, bestehend aus 90 % Platinpulver und 10 % eines Boro-Silikat-Emails der oben angeführten Zusammensetzung
35 % organische Siebdruckpastengrundstoff auf Terpeniolbasis.

Der Druck kann z.B. 10 min bei 1290°C getrocknet und anschließend eine 1/2 h bei 1.080°C gebrannt werden.

Anschließend kann dann über dem Temperatursensor und auf dem Trägermaterial ein platin-haltiger Katalysator, in Form eines katalysatorhaltigen, keramischen Überzugs, der im vorliegenden Fall aus zwei Schichten besteht, aufgetragen werden. Dazu wird wie folgt vorgegangen:

240 cm³ Wasser und 1 cm³ Salpetersäure werden mit 100 g y-Aluminiumoxid und Boehmit vermischt, wobei ein ALuminiumoxidschlamm entsteht. Der mit Isolatorschicht und Temperatursensor versehene Träger wird in den Schlamm eingetaucht. Nach dem Eintauchen wird überflüssiger ALuminiumoxidschlamm entfernt und das mit ALuminiumoxidschlamm bedeckte Trägermaterial zunächst 1 h bei 130°C und danach 1,5 h bei 550°C gebrannt.

Das gebrannte Material wird mit einer edelmetallhaltigen Lösung, bestehend aus

Pt (NO₂)₂(NH₃)₂

und Stickstoffrhodium oder mit einer Ruthenium-Lösung (bei Oxidationskatalysatoren) imprägniert. Das imprägnierte Produkt wird 1 h bei 200°C und anschließend 2 h bei 600°C gebrannt.

Das Verhältnis von Pt und Rh kann 5:1 betragen, bei einer Edelmetallkonzentration von ca. 1,6 g pro 1. Anschließend wird zum Aufbringen einer zweiten Schicht des katalysatorhaltigen keramischen Überzugs 1.250 ml einer 0,3 molaren Zirkonyl-Octahydratlösung mit 1.000 ml einer 0,25 molaren Lanthannitrat-Hexahydrat-Lösung mit 120 g Ceroxid (CeO₂) und 50 g Boehmit vermischt. Die erhaltene Mischung wird getrocknet, so daß Zr und Ce auf der Oberfläche der Feststoffe fixiert werden. Das erhaltene Produkt wird gemahlen. Dann werden 240 cm³ Wasser und 1 cm³ Salpetersäure zu dem Produkt zugemischt, wobei eine schlammartige Substanz entsteht.

Das mit der ersten Schicht bedeckte Substrat wird in den Schlamm eingetaucht und nach dem Herausnehmen überschüssiger Schlamm entfernt. Anschließend wird bei 1 h bei 130°C und danach 1,5 h bei 550°C gebrannt.

Das so erhaltene Produkt wird in eine 0,1 %-ige Tetraaminpalladiumlösung getaucht, so daß das Palladium in einem Anteil von 1 g/l in die zweite Schicht eingebracht wird. Das so erhaltene Produkt wird 1 h bei 130°C und danach 1,5 h bei 550°C gebrannt.

## Patentansprüche

1. Im strömenden Abgas von Abgasanlagen, vorzugsweise Verbrennungsmotoren anzuordnende Katalysatoren mit einem mit katalysatorhaltigem keramischen Überzug versehenen Trägermaterial und zumindest einem in Dickschichttechnik aufgebrachten Temperatursensor,
dadurch gekennzeichnet, daß auf der Oberfläche des Trägermaterials (5) der Temperatursensor (7) angeordnet ist und daß der katalysatorhaltige keramische Überzug (8) den Temperatursensor (7) bedeckt.

2. Katalysator nach Anspruch 1, dadurch gekennzeichnet, daß das Trägermaterial (5) metallisch ist und zwischen diesem und dem Temperatursensor (7) eine elektrisch isolierende Isolationsschicht (6) aufgebracht ist.

3. Katalysator nach Anspruch 1 oder 2, dadurch gekennzeichnet, daß zwei Temperatursensor in Strömungsrichtung des Abgases jeweils am Eingang und Ausgang des Katalysators, gegebenenfalls auf der Isolatorschicht, vorgesehen sind.

4. Katalysator nach Anspruch 1 oder 2, dadurch gekennzeichnet, daß zwei Temperatursensor bezüglich der Strömungsrichtung des Abgases am Ausgang des Katalysators vorgesehen sind.

5. Katalysator nach Anspruch 4, dadurch gekennzeichnet, daß einer der Temperatursensoren mit einer gasundurchlässigen und mindestens ein weiterer der Temperatursensoren mit einer gasdurchlässigen, porösen Schutzschicht abgedeckt ist.

6. Katalysator nach einem der Ansprüche 1 bis 5, dadurch gekennzeichnet, daß der Temperatursensor Platin aufweist.

7. Verfahren zur Herstellung eines Katalysators nach einem der Ansprüche 1 bis 6 mit einem Trägermaterial und einem katalysatorhaltigen keramischen Überzug sowie zumindest einem in Dickschichttechnik aufgebrachten Temperatursensor, dadurch gekennzeichnet, daß auf dem Trägermaterial der Temperatursensor in Dicktschichttechnik aufgebracht sowie bei einer Temperatur getempert wird, die gleich oder niedriger ist als die Tempertemperatur eines gegebenenfalls zwischen einem metallischen Trägermaterial und dem Temperatursensor vorgesehenen Isolators, und daß auf den Temperatursensor ein katalysatorhaltiger, keramischer Überzug in Dickschichttechnik aufgebracht wird, der bei einer Temperatur getempert wird, die gleich oder niedriger ist als die Tempertemperatur des Temperatursensors.

8. Verfahren nach Anspruch 7, dadurch gekennzeichnet, daß vor dem Aufbringen des Temperatursensors auf ein metallisches Trägermaterial ein elektrischer Isolator, der ein Boro-Silikat-Email aufweist und bei einer Temperatur von 960°C bis 1250°C getempert wird, aufgebracht wird.

## Claims

1. Catalysts to be arranged in the flowing exhaust gas of exhaust systems, preferably internal combustion engines, and having a support material, provided with a catalyst-containing ceramic coat, and at least one temperature sensor applied by the thick-film technique, characterized in that the temperature sensor (7) is arranged on the surface of the support material (5) and that the catalyst-containing ceramic coat (8) covers the temperature sensor (7).

2. Catalyst according to Claim 1, characterized in that the support material (5) is metallic and an electrically insulating insulation layer (6) is applied between said support material and the temperature sensor (7).

3. Catalyst according to Claim 1 or 2, characterized in that two temperature sensors are provided in the direction of flow of the exhaust gas, at the entrance and exit of the catalyst, optionally on the insulator layer.

4. Catalyst according to Claim 1 or 2, characterized in that two temperature sensors are provided at the exit of the catalyst with respect to the direction of flow of the exhaust gas.

5. Catalyst according to Claim 4, characterized in that one of the temperature sensors is covered with a gas-impermeable protective layer and at least one further temperature sensor is covered with a gas-permeable, porous protective layer.

6. Catalyst according to any of Claims 1 to 5, characterized in that the temperature sensor comprises platinum.

7. Process for the production of a catalyst according to any of Claims 1 to 6, comprising support material and a catalyst-containing ceramic coat and at least one temperature sensor applied by the thick-film technique, characterized in that the temperature sensor is applied to the support material by the thick-film technique and is heated at a temperature which is the same as or lower than the heating temperature of an insulator optionally provided between a metallic support material and the temperature sensor, and that a catalyst-containing, ceramic coat is applied to the temperature sensor by the thick-film technique and is heated at a temperature which is the same as or lower than the heating temperature of the temperature sensor.

8. Process according to Claim 7, characterized in that an electrical insulator which comprises a borosilicate enamel and is heated at a temperature of 960°C to 1250°C is applied before the temperature sensor is applied to a metallic support material.

## Revendications

1. Catalyseurs présentant un matériau de support muni d'un revêtement céramique contenant un catalyseur et au moins un capteur de température appliqué selon une technique en couche épaisse, à disposer dans des gaz d'échappement s'écoulant dans des installations de gaz d'échappement, de préférence de moteurs à combustion,
caractérisés en ce qu'il est disposé sur la surface du matériau de support (5) le capteur de température (7) et en ce que le revêtement céramique contenant un catalyseur (8) recouvre le capteur de température (7).

2. Catalyseur selon la revendication 1, caractérisé en ce que le matériau de support (5) est métallique et une couche électriquement isolante (6) est appliquée entre celui-ci et le capteur de température (7).

3. Catalyseur selon la revendication 1 ou 2, caractérisé en ce que sont prévus deux capteurs de température dans la direction de l'écoulement des gaz d'échappement à la fois à l'entrée et à la sortie du catalyseur, éventuellement sur la couche isolante.

4. Catalyseur selon la revendication 1 ou 2, caractérisé en ce que sont prévus deux capteurs de température à la sortie du catalyseur relativement à la direction d'écoulement des gaz d'échappement.

5. Catalyseur selon la revendication 4, caractérisé en ce que l'un des capteurs de température est recouvert d'une couche protectrice imperméable aux gaz et au moins un autre des capteurs de température d'une couche protectrice poreuse perméable aux gaz.

6. Catalyseur selon l'une quelconque des revendications 1 à 5, caractérisé en ce que le capteur de température présente du platine.

7. Procédé pour la préparation d'un catalyseur selon l'une quelconque des revendications 1 à 6 présentant un matériau de support et un revêtement céramique contenant un catalyseur ainsi qu'au moins un capteur de température appliqué selon une technique en couche épaisse, caractérisé en ce qu'il est appliqué sur le matériau de support le capteur de température selon une technique en couche épaisse et celui-ci est maintenu à une température qui est identique ou inférieure à la température de maintien à température d'un isolant éventuellement prévu entre un matériau de support métallique et le capteur de température et en ce qu'il est appliqué sur le capteur de température un revêtement céramique contenant un catalyseur selon une technique en couche épaisse, lequel est maintenu à une température qui est identique ou inférieure à la température de maintien à température du capteur de température.

8. Procédé selon la revendication 7, caractérisé en ce qu'un isolant électrique, qui présente un émail de borosilicate et qui est maintenu à une température de 960°C à 1 250°C, est appliqué avant l'application du capteur de température sur un matériau de support métallique.
